# EUROPEAN PATENT APPLICATION

(11) **EP 2 239 213 A1**
(43) Date of publication of application: **13.10.2010**
(21) Application number: 09157803.9
(22) Date of filing: 10.04.2009
(51) Int. Cl.: B65G 39/04

(54) **Roller positioning structure**

(71) Applicant: Chen, Po-Feng, Sinjhuang City, Taipei County (TW)
(72) Inventor: Chen, Po-Feng, Sinjhuang City, Taipei County (TW)
(74) Representative: Chaillot, Geneviève

(57) **Abstract**

A Skate-Wheel positioning structure includes a plurality of Skate-Wheels (2) disposed on an axle (1). A set of protrusions (11,12) is disposed on either side of each Skate-Wheel to limit the position of the Skate-Wheel.

## Description

### BACKGROUND OF THE INVENTION

### 1. Field of the invention

The invention generally relates to a Skate-Wheel positioning structure. More particularly, the invention relates to a Skate-Wheel positioning structure in which a set of position-limiting protrusions is disposed on either side of each Skate-Wheel to limit the position of each Skate-Wheel.

### 2. Description of the prior art

There are several types of rollers used for the conveyor system. The conventional elongated cylindrical rollers are most widely used, but their manufacturing cost is higher because more material is needed. Another type uses several Skate-Wheels to replace each elongated cylindrical rollers and spacers are used to limit the positions of these Skate-Wheels; therefore, less material is needed. However, because these spacers are fitted onto the axles by manual labor, labor cost is increased.

From the above, we can see that the rollers of the prior art have many disadvantages and needs to be improved.

To eliminate the disadvantages of the rollers of the prior art, the inventor has put in a lot of effort in the subject and has successfully come up with the Skate-Wheel positioning structure of the present invention.

### SUMMARY OF THE INVENTION

A first object of the present invention is to provide a Skate-Wheel positioning structure having position-limiting protrusions that are fixedly attached to the axle by mechanical force or integrally formed with the axle. Therefore, there is no need to use manual labor to fit the spacers onto the axle. Consequently, assembly may be sped up, less manual labor is needed and the cost for the purchase of spacers may be eliminated.

A second object of the present invention is to provide a Skate-Wheel positioning structure that has the advantages of simple structure, easy assembly and low manufacturing cost.

To reach these objects, the Skate-Wheel positioning structure of the present invention is disclosed. The Skate-Wheel positioning structure of the present invention comprises an axle and several Skate-Wheels. A set of position-limiting protrusions is disposed on either side of each Skate-Wheel to limit the position of each Skate-Wheel. These position-limiting protrusions can limit the position of each Skate-Wheel effectively. Therefore, the cost for the purchase of spacers may be eliminated and assembly may be sped up.

An object of the invention is a skate-Wheel positioning structure, comprising an axle, having at least two sets of protrusions, a first set and a second set, which are separated by a distance which allows the disposition of the Skate-Wheel, and each set of protrusions includes at least two position-limiting protrusions.

Preferably, a third set of position-limiting protrusions is disposed on an appropriate location of the axle, and a spring is fitted beside the third set of position-limiting protrusions, which can limit the position of the spring.

Preferably, at least two sets of the position-limiting protrusions are disposed on the axle.

According to a particular feature of the invention, the line connecting the protrusions of the first set of protrusions may be perpendicular or parallel to the line connecting the protrusions of the second set of protrusions.

According to another particular feature of the invention, the protrusions may be fixedly attached to the axle by mechanical force, or may be integrally formed with the axle.

According to another particular feature of the invention, the Skate-Wheels may be made of a plastic material, of a metal or of a resilient material.

### BRIEF DESCRIPTION OF THE DRAWINGS

Fig. 1A is a perspective view showing the Skate-Wheel positioning structure of the present invention;
Fig. 1B is a top view showing the locations of the position-limiting protrusions;
Fig. 2A is a perspective view showing a second embodiment of the Skate-Wheel positioning structure of the present invention;
Fig. 2B is a top view showing the locations of the position-limiting protrusions of the second embodiment; and
Fig. 3 is a perspective view schematically illustrating how the Skate-Wheel positioning structure of the present invention is used in a conveyor platform.

### DESCRIPTION OF THE PREFERRED EMBODIMENT

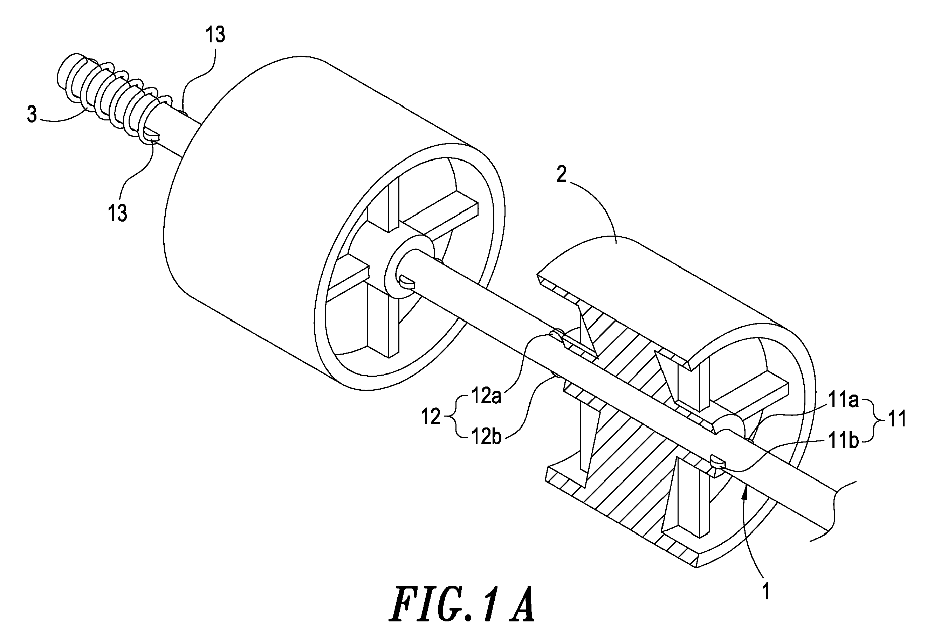

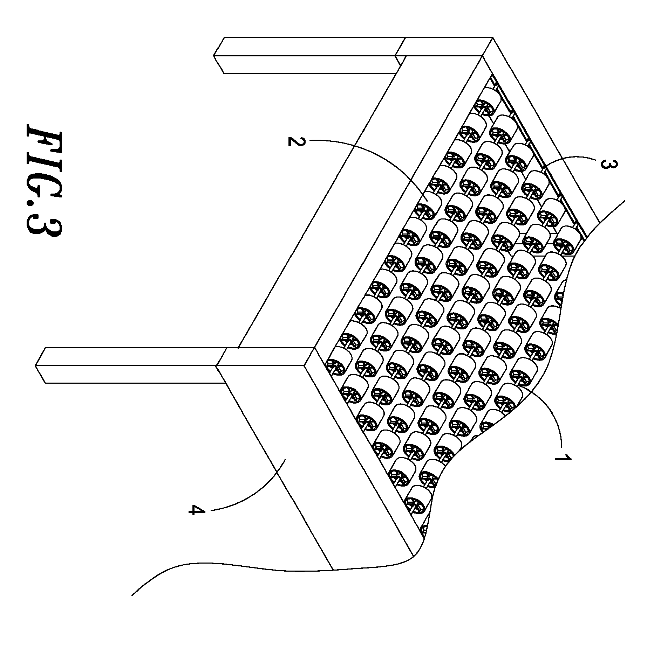

Please see Figs. 1A, 1B, 2A, 2B and 3, which are drawings schematically illustrating the Skate-Wheel positioning structure of the present invention. The Skate-Wheel positioning structure of the present invention comprises an axle 1 and several protrusions 11 and 12.

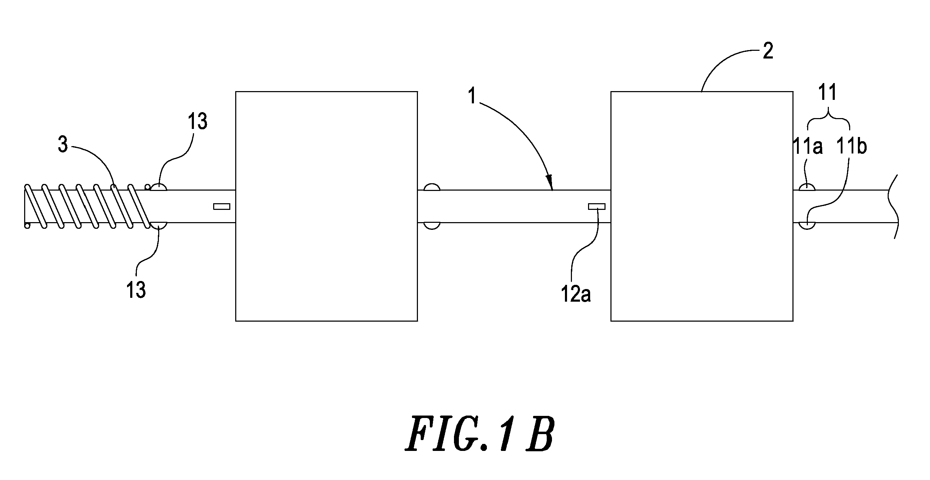

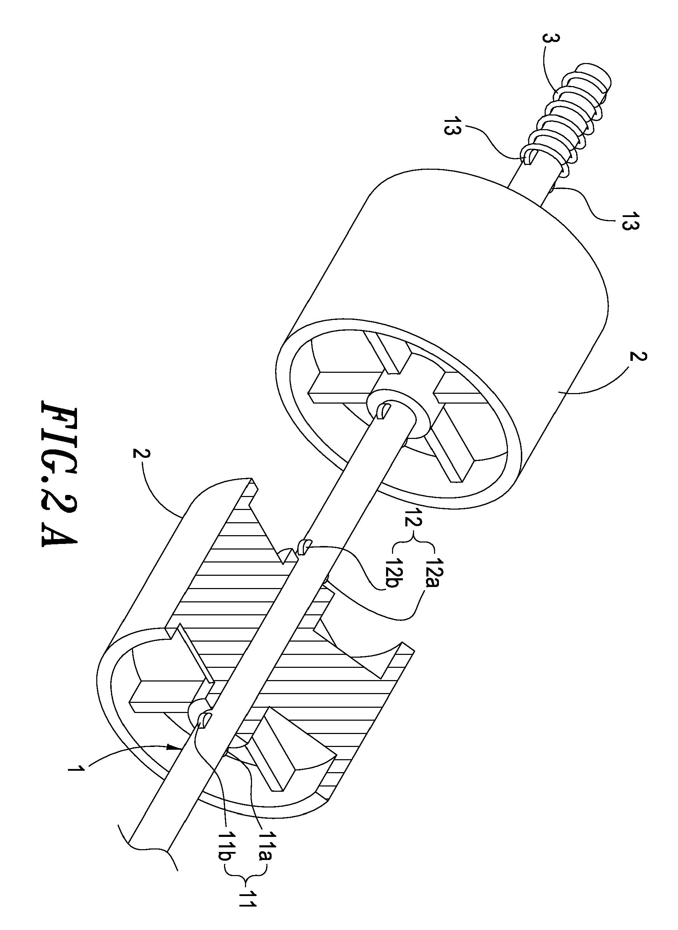

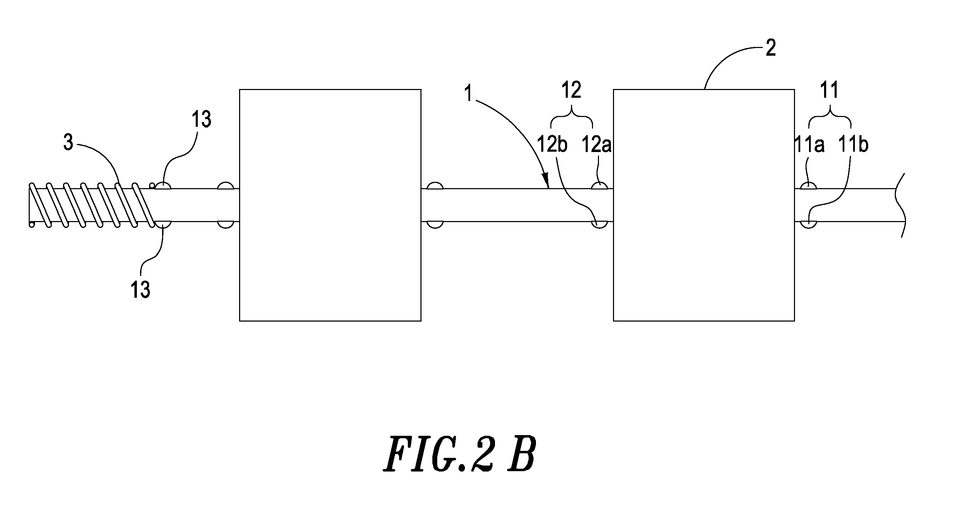

A first set of position-limiting protrusions 11 is disposed on one side of the Skate-Wheel 2, and a second set of position-limiting protrusions 12 is disposed on the other side of the Skate-Wheel 2. The first set of position-limiting protrusions 11 includes at least two position-limiting protrusions 11a and 11b. The second set of position-limiting protrusions 12 includes at least two position-limiting protrusions 12a and 12b. A third set of position-limiting protrusions 13 is disposed on an appropriate location of the axle 1, and a spring 3 is fitted beside the third set of position-limiting protrusions 13, which can limit the position of the spring 3. At least two sets of the position-limiting protrusions 11 and 12 may be employed. The protrusions 11a, 11b, 12a and 12b may be fixedly attached to the axle 1 by mechanical force. Alternatively, the protrusions 11a, 11b, 12a and 12b may be integrally formed with the axle 1. As illustrated in Figs. 1A and 1B, the line connecting the protrusions 11a and 11b may be perpendicular to the line connecting the protrusions 12a and 12b. Alternatively, as illustrated in Figs. 2A and 2B, the line connecting the protrusions 11a and 11b may be parallel to the line connecting the protrusions 12a and 12b. The Skate-Wheels 2 may be made of a plastic material; alternatively, the Skate-Wheels 2 may be made of a metal; alternatively, the Skate-Wheels 2 may be made of a resilient material.

In assembly, one set of position-limiting protrusions 11 and 12 is disposed on either side of each Skate-Wheel so as to limit the position of the Skate-Wheel. These position-limiting protrusions can limit the position of each Skate-Wheel effectively and no manual labor is needed to fit the spacers of the prior art. In the Skate-Wheel positioning structure of the present invention, these position-limiting protrusions may be fixedly attached to the axle 1 by mechanical force or may be integrally formed with the axle 1. Therefore, no spacers are needed. In addition, the tension of the spring 3 allows the axles 1 to be firmly seated on a conveyor platform 4. Furthermore, the Skate-Wheel positioning structure of the present invention allows a much shorter manufacturing time than that of prior art; therefore, the efficiency in manufacturing is greatly enhanced.

In contrast to the roller of the prior art, the Skate-Wheel positioning structure of the present invention has the following advantages:
1. The protrusions 11a, 11b, 12a and 12b may be firmly attached to the axle 1 by mechanical force. Alternatively, the protrusions 11a, 11b, 12a and 12b may be integrally formed with the axle 1. Therefore, there is no need to use the spacers. Consequently, assembly may be sped up, less manual labor is needed and the cost for the purchase of spacers may be eliminated.
2. The Skate-Wheel positioning structure of the present invention has the advantages of simple structure, easy assembly and low manufacturing cost.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

**1.** A Skate-Wheel positioning structure, comprising:
an axle (1), having at least two sets of protrusions (11, 12), which are separated by a distance which allows the disposition of the Skate-Wheel, and each set of protrusions (11, 12) includes at least two position-limiting protrusions (11a, 11b; 12a, 12b).

**2.** The Skate-Wheel positioning structure as in claim 1, wherein a third set of position-limiting protrusions (13) is disposed on an appropriate location of the axle (1), and a spring (3) is fitted beside the third set of position-limiting protrusions (13), which can limit the position of the spring (3).

**3.** The Skate-Wheel positioning structure as in claim 1, wherein at least two sets of the position-limiting protrusions (11, 12) are disposed on the axle (1).

**4.** The Skate-Wheel positioning structure as in claim 1, wherein the line connecting the protrusions (11a, 11b) may be perpendicular to the line connecting the protrusions (12a, 12b).

**5.** The Skate-Wheel positioning structure as in claim 1, wherein the line connecting the protrusions (11a, 11b) may be parallel to the line connecting the protrusions (12a, 12b).

**6.** The Skate-Wheel positioning structure as in claim 1, wherein the protrusions (11a, 11b, 12a, 12b) may be fixedly attached to the axle (1) by mechanical force.

**7.** The Skate-Wheel positioning structure as in claim 1, wherein the protrusions (11a, 11b, 12a, 12b) may be integrally formed with the axle (1).

**8.** The Skate-Wheel positioning structure as in claim 1, wherein the Skate-Wheels may be made of a plastic material.

**9.** The Skate-Wheel positioning structure as in claim 1, wherein the Skate-Wheels may be made of a metal. The Skate-Wheel positioning structure as in claim 1, wherein the Skate-Wheels may be made of a resilient material.
